# EUROPEAN PATENT APPLICATION

(11) **EP 3 576 314 A1**
(43) Date of publication of application: **04.12.2019**
(21) Application number: 18757569.1
(22) Date of filing: 13.02.2018
(51) Int. Cl.: H04B 7/06, H04B 10/2575

(54) **WEIGHT ASSIGNMENT METHOD AND APPARATUS IN BEAMFORMING (BF)**

(30) Priority: 22.02.2017 CN 201710096070
(71) Applicant: Huawei Technologies Co., Ltd., Longgang District Shenzhen, Guangdong 518129 (CN)
(72) Inventor: LI, Xianghua, Shenzhen Guangdong 518129 (CN)
(74) Representative: Gill Jennings & Every LLP
(86) International application number: PCT/CN2018/076673
(87) International publication number: WO 2018/153321

(57) **Abstract**

This application provides a method and an apparatus for weight assignment in BF, to reduce a power division insertion loss of the BF and avoid electromagnetic interference between a power division network and each baseband port-antenna unit channel. The apparatus in embodiments of this application includes M optical carrier modules, M electro-optic modulation modules, M optical time delay modules, a splitting wavelength division multiplexer WDM, N photoelectric conversion modules, and an antenna array having k^{∗}N antenna units, where k, M, and N are integers greater than or equal to 1. The optical carrier module is configured to generate an optical carrier having N different wavelengths. The electro-optic modulation module is configured to modulate an electrical signal onto the optical carrier, to obtain a modulated optical signal. The optical time delay module is configured to perform time delay adjustment on the modulated optical signal. The splitting WDM is configured to perform splitting based on a wavelength of the modulated optical signal that undergoes the time delay adjustment, to obtain N paths of optical sub-signals. The photoelectric conversion module is configured to convert the N paths of optical sub-signals into N paths of electrical sub-signals. The antenna array is configured to form a plurality of beams having adjustable directions based on the N paths of radio frequency electrical signals.

## Description

This application claims priority to Chinese Patent Application No. 201710096070.5, filed with the Chinese Patent Office on February 22, 2017 and entitled "METHOD AND APPARATUS FOR WEIGHT ASSIGNMENT IN BEAMFORMING BF", which is incorporated by reference in its entirety.

### TECHNICAL FIELD

This application relates to the field of communications technologies, and in particular, to a method and an apparatus for weight assignment in beamforming (Beamforming, BF).

### BACKGROUND

Because there are a large quantity of bandwidth resources in a high-frequency band, use of the high-frequency band in 5G mobile communication to increase a data rate is considered. For example, use of both centimeter wave bands and millimeter wave bands, such as 15 GHz, 28 GHz, 38 GHz, 60 GHz, and 73 GHz, in an access or a backhaul system in the 5G mobile communication is considered. In addition to a capability of providing a higher bandwidth, the high-frequency band further has a very small wavelength, and an antenna unit used to transmit a signal is small in size. Therefore, a plurality of antenna units can be integrated into a transceiver. However, compared with a low-frequency band below 3 GHz, transmission losses of centimeter waves and millimeter waves are excessively high.

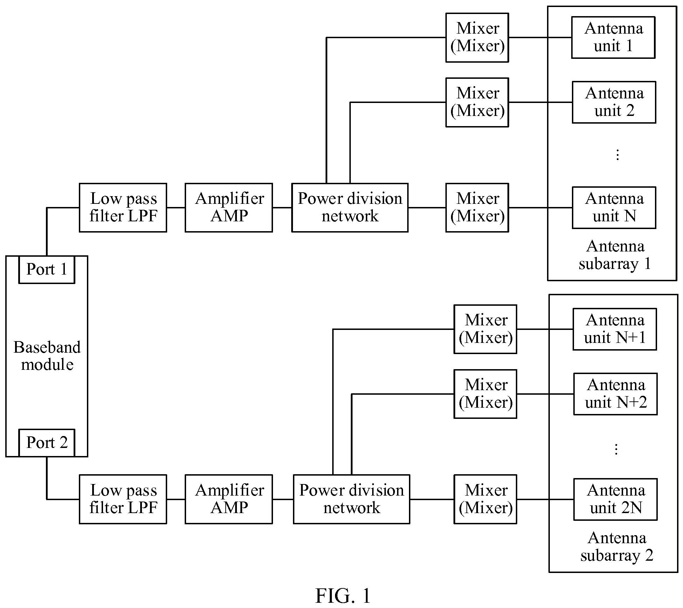

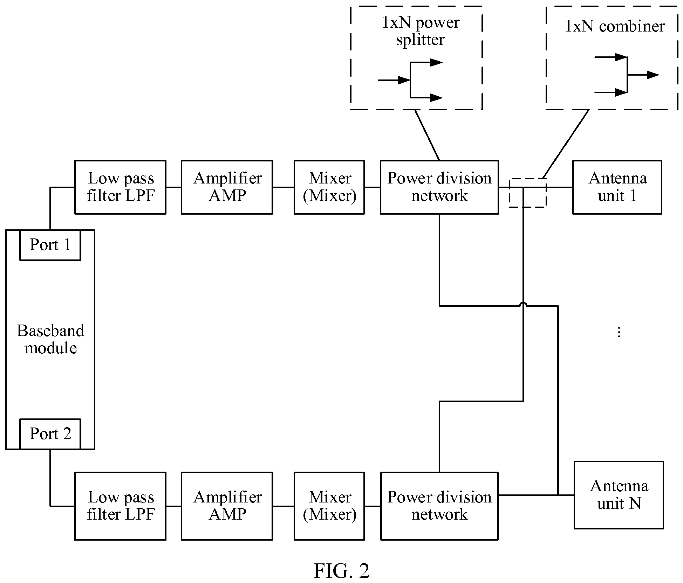

BF is one of main technical methods for reducing a high-frequency transmission loss. A plurality of antenna units constitute an array to implement a directional beam, thereby increasing a gain and received signal power of a transceiver antenna. Currently, common BF methods include digital BF (Digital Beamforming, DBF) and hybrid BF (Hybrid Beamforming, HBF). Due to a reduction in a quantity of baseband ports, analog to digital converters (Digital to Analog Converter, ADC), digital to analog converters (Digital to Analog Converter, DAC), and transceiver units (Transmission Receiver Unit, TRU), complexity, costs, and power consumption are reduced by using the HBF, and the HBF gradually becomes a mainstream solution for the high-frequency band. Existing HBF architectures mainly include 1. subarray-connected BF and fully-connected BF. The subarray-connected BF architecture is shown in FIG. 1. One antenna subarray is connected to one baseband port. For example, a baseband electrical signal of a baseband port 1 is divided into a plurality of paths of intermediate-frequency signals by using a power division network after passing through a low pass filter (Low Pass Filter, LPF) and an amplifier (Amplifier, AMP). The plurality of paths of intermediate-frequency signals are up-converted through a mixer (Mixer), and are converted into radio frequency electrical signals. Alternatively, a baseband electrical signal is directly converted into a radio frequency electrical signal, and the radio frequency electrical signal is transmitted in a form of a directional beam after undergoing power amplification. Likewise, same processing is performed on a baseband electrical signal of a baseband port 2. The conventional fully-connected BF architecture is shown in FIG. 2. Each baseband port is connected to all antenna subarrays. For example, baseband electrical signals of baseband ports 1 and 2 are converted into intermediate frequency electrical signals through an LPF and an AMP, and then the intermediate frequency electrical signals are up-converted into radio frequency electrical signals through a mixer. Alternatively, a baseband electrical signal is directly converted into a radio frequency electrical signal, and then the radio frequency electrical signal is divided into a plurality of paths of radio frequency electrical sub-signals by using a power division network. Before reaching an antenna unit, the plurality of paths of radio frequency electrical sub-signals need to be combined by using a combiner, and then transmitted by using all antenna units in an antenna array.

However, because each baseband port is connected to only one antenna subarray, and a gain of each antenna unit cannot be fully used in the subarray-connected HBF architecture, a capacity of the subarray-connected HBF architecture is less than that of the fully-connected HBF architecture. In addition, when the conventional fully-connected HBF architecture includes a relatively large quantity of antenna units, a relatively large quantity of power splitters are required. For example, in a case of four baseband ports and 128 antenna units, 4^{∗}127 power splitters and 3^{∗}128 combiners are required. Because a combiner is a type of a power splitter, a quantity of power splitters reaches up to 892. A power division insertion loss caused by the power splitters reaches 7 dB and a combining insertion loss reaches 2 dB. In addition, the power division network is complex. Consequently, electromagnetic interference between the power division network and each baseband port-antenna unit channel is serious.

### SUMMARY

This application provides a method and an apparatus for weight assignment in BF, to reduce a power division insertion loss of the BF and avoid electromagnetic interference between a power division network and each baseband port-antenna unit channel.

A first aspect of this application provides an apparatus for weight assignment in BF. The apparatus includes M optical carrier modules, M electro-optic modulation modules, M optical time delay modules, a splitting WDM, N photoelectric conversion modules, and an antenna array having k^{∗}N antenna units, where k, M, and N are integers greater than or equal to 1, where
the optical carrier module is configured to generate an optical carrier having N different wavelengths;
the electro-optic modulation module is configured to modulate an electrical signal onto the optical carrier, to obtain a modulated optical signal, where the electrical signal is a baseband electrical signal, an intermediate frequency electrical signal, or a radio frequency electrical signal;
the optical time delay module is configured to perform time delay adjustment on the modulated optical signal;
the splitting WDM is configured to perform splitting based on a wavelength of the modulated optical signal that undergoes the time delay adjustment, to obtain N paths of optical sub-signals;
the photoelectric conversion module is configured to convert the N paths of optical sub-signals into N paths of electrical sub-signals, where the electrical sub-signals are baseband electrical signals, intermediate frequency electrical signals, or radio frequency electrical signals, where
when the N paths of electrical sub-signals are baseband electrical signals or intermediate frequency electrical signals, the N paths of electrical sub-signals are up-converted to obtain N paths of radio frequency electrical signals; and
the antenna array is configured to form a plurality of beams having adjustable directions based on amplitude and phase weightings of the N paths of radio frequency electrical signals.

In a mobile communications system working at a high frequency, a transceiver of a communications device may integrate a plurality of antenna units. In an existing mobile communication standard, when information is sent, a directional beam needs to be implemented by forming an array by using a plurality of antenna units. The apparatus in this application includes the M optical carrier modules, the M electro-optic modulation modules, the M optical time delay modules, the splitting WDM, the N photoelectric conversion modules, and the antenna array having the k^{∗}N antenna units, where k, M, and N are integers greater than or equal to 1. The optical carrier module generates an optical carrier having N different wavelengths. The electro-optic modulation module modulates an electrical signal onto the optical carrier, to obtain a modulated optical signal, where the electrical signal may be one of a baseband electrical signal, an intermediate frequency electrical signal, and a radio frequency electrical signal. A specific type of the electrical signal depends on a previous processing manner of the electrical signal obtained by the apparatus in this application. In a first manner, a baseband module directly outputs a baseband electrical signal. In a second manner, after a baseband module outputs a baseband electrical signal, the baseband electrical signal is up-converted into an intermediate frequency electrical signal through a mixer. In a third manner, after a baseband module outputs a baseband electrical signal, the baseband electrical signal is up-converted into a radio frequency electrical signal through a mixer. After obtaining the modulated optical carrier, the optical time delay module performs time delay adjustment on the modulated optical signal, and the splitting WDM performs splitting based on a wavelength of the modulated optical signal that undergoes the time delay adjustment. Because the optical carrier has N different wavelengths, the modulated optical signal is split to obtain N paths of optical sub-signals. The photoelectric conversion module converts the N paths of optical sub-signals into N paths of electrical sub-signals, where whether the electrical sub-signals are baseband electrical signals, intermediate frequency electrical signals, or radio frequency electrical signals depends on the electrical signal received by the electro-optic modulation module. If the N paths of electrical sub-signals are radio frequency electrical signals, the antenna array radiates the N paths of radio frequency electrical signals based on amplitude and phase weightings of the N paths of radio frequency electrical signals, to form a plurality of beams having adjustable directions. If the N paths of electrical sub-signals are baseband electrical signals or intermediate frequency electrical signals, because the antenna array can radiate only a radio frequency electrical signal, the N paths of electrical sub-signals need to be up-converted, to obtain N paths of radio frequency electrical signals. Then, the antenna array forms a plurality of beams having adjustable directions based on amplitude and phase weightings of the N paths of radio frequency electrical signals. All or some of the k^{∗}N antenna units of the antenna array are configured to radiate the N paths of radio frequency electrical signals, thereby implementing beam transmission of an electrical signal. It is known that one electrical signal corresponds to a port electrical signal of one baseband port of the baseband module, and each electrical signal is implemented in such a way. Compared with existing conventional fully-connected BF, in this solution, optical time delay processing is performed on the electrical signal. Therefore, a power splitter is replaced with a splitting function of a WDM, and a quantity of WDMs is obviously reduced. For example, in a case of four baseband ports and 128 antenna units, in the conventional fully-connected BF, 508 power splitters having a splitting function are required, and a power division insertion loss reaches 7 dB, while in this solution, only one WDM is required to implement a splitting function, and an insertion loss of the WDM is usually 0.5 dB. It can be learned that a power division insertion loss is obviously reduced. In addition, optical-to-electrical conversion for the electrical signal can effectively avoid electromagnetic interference between a power division network and each baseband port-antenna unit channel in the conventional fully-connected BF.

With reference to the first aspect of this application, in a first implementation of the first aspect of this application, the antenna array radiates the N paths of radio frequency electrical signals respectively by using the k^{∗}N antenna units based on the amplitude and phase weightings of the N paths of radio frequency electrical signals, to form the plurality of beams having the adjustable directions.

In the first aspect of this application, all or some of the k^{∗}N antenna units in the antenna array can be configured to radiate the N paths of radio frequency electrical signals. In this embodiment, all of the k^{∗}N antenna units in the antenna array need to be used to radiate the N paths of radio frequency electrical signals. The radiation is based on the amplitude and phase weightings of the N paths of radio frequency electrical signals. Therefore, beams in a plurality of directions can be formed. Compared with existing subarray-connected BF, in this solution, all antenna units in the antenna array are used, and gains of the antenna units in the antenna array are fully used, thereby improving a capacity.

With reference to the first implementation of the first aspect of this application, in a second implementation of the first aspect of this application, the optical carrier module includes a combining WDM and N tunable lasers, where preset wavelengths of the N tunable lasers are different from each other;
the tunable laser is configured to generate an optical wave; and
the combining WDM is configured to combine N optical waves having different wavelengths, to obtain the optical carrier.

The optical carrier module may specifically include the combining WDM and the N tunable lasers. The N tunable lasers are preset, and the preset wavelengths of the tunable lasers may be set in advance. In addition, the preset wavelengths are different from each other. In a specific implementation process, the tunable laser may further change a wavelength of a generated optical wave through adjustment. After the N tunable lasers generate the N independent optical waves having the different wavelengths, a combining WDM is further required to perform wavelength division multiplexing on the optical waves, to obtain the optical carrier of N wavelengths through combination. Therefore, on a basis of one splitting WDM, M combining WDMs further need to be added. In the case of four baseband ports and 128 antenna units, there are four combining WDMs in this solution. Compared with 384 combiners in the conventional fully-connected BF, a combining loss is obviously less than that in the conventional fully-connected BF.

With reference to the first implementation of the first aspect of this application, in a third implementation of the first aspect of this application, the optical carrier module includes a tunable laser, an optical circulator, and an optical resonant microcavity, where
the tunable laser is configured to generate an optical wave of a preset single wavelength;
the optical circulator is configured to: transmit the optical wave to the optical resonant microcavity, and prevent the optical wave input to the optical resonant microcavity from being reflected back to the tunable laser; and
the optical resonant microcavity is configured to generate resonance for the input optical wave, to obtain the optical carrier having N different wavelengths that are at equal intervals.

The optical carrier module specifically includes the tunable laser, the optical circulator, and the optical resonant microcavity. A tunable laser that can generate a single wavelength is set in advance, and a wavelength of the tunable laser may be set in advance. In a specific implementation process, the tunable laser may further change a wavelength of a generated optical wave through adjustment. After the tunable laser generates the optical wave of the preset wavelength, the optical circulator transmits the optical wave to the optical resonant microcavity, and prevents the optical wave input to the optical resonant microcavity from being reflected back to the tunable laser. The optical resonant microcavity generates resonance for the input optical wave, and outputs an optical carrier having N different wavelengths that are at equal intervals. On a basis of one splitting WDM, no additional WDM needs to be added, and a combining loss is obviously less than that in the conventional fully-connected BF.

With reference to the first aspect of this application, the first implementation of the first aspect, the second implementation of the first aspect, or the third implementation of the first aspect, in a fourth implementation of the first aspect of this application, when the N paths of electrical sub-signals are baseband electrical signals or intermediate frequency electrical signals, the apparatus further includes an LO and N mixers, where
the LO is configured to generate a local oscillator signal; and
the N mixers are configured to up-convert the N paths of electrical sub-signals based on the local oscillator signal, to obtain N paths of radio frequency electrical signals.

When an electrical signal is a baseband electrical signal or an intermediate frequency electrical signal, the N paths of electrical sub-signals are essentially baseband electrical signals or intermediate frequency electrical signals. To enable the antenna array to radiate the N paths of electrical sub-signals, the N paths of electrical sub-signals need to be respectively converted into N paths of radio frequency electrical signals. A specific process is that, a local oscillator (Local Oscillator, LO) generates a local oscillator signal, and then a mixer up-converts and modulates the N paths of electrical sub-signals by using the local oscillator signal, to obtain N paths of radio frequency signals. In this way, the N paths of electrical sub-signals can be transmitted by using the antenna array after being up-converted and modulated.

With reference to the fourth implementation of the first aspect of this application, in a fifth implementation of the first aspect of this application, the apparatus further includes N PAs; and
the N PAs are configured to perform power amplification on the N paths of radio frequency electrical signals respectively.

Before the antenna array transmits a signal, in consideration of problems such as propagation attenuation of the signal, power amplification needs to be performed. Therefore, before each path of radio frequency electrical signal is transmitted by the antenna unit, power amplification needs to be performed by using a power amplifier (Power amplifier, PA). Then, the N paths of radio frequency electrical signals are respectively transmitted by using the k^{∗}N antenna units.

With reference to the fourth implementation of the first aspect of this application, in a fifth implementation of the first aspect of this application, the optical time delay module is an optical fiber true time delay unit based on an electric switch, an optical fiber true time delay unit based on an optical switch, a linearly chirped fiber grating time delay unit, or a true time delay unit based on spatial optical path switching.

In consideration of that an optical true time delay unit has advantages such as a low loss, no electromagnetic interference, and an ultra wideband, the optical time delay module uses an optical true time delay unit. Currently, there are many common optical true time delay units, such as an optical fiber true time delay unit based on an electric switch, an optical fiber true time delay unit based on an optical switch, a linearly chirped fiber grating time delay unit, and a true time delay unit based on spatial optical path switching. A principle of the optical fiber true time delay unit based on the electric switch is: An optical signal passes through an optical true time delay (OTTD) unit, and the OTTD selects, based on a time delay requirement, optical fiber rings of different lengths by using an electric switch, to perform time delay processing on the optical signal. A principle of the optical fiber true time delay unit based on the optical switch is similar to that of the optical fiber true time delay unit based on the electric switch. A difference lies in that the optical fiber true time delay unit based on the optical switch selects optical fiber rings of different lengths based on an optical switch. A principle of the linearly chirped fiber grating time delay unit is: An optical signal passes through a linearly chirped fiber grating for reflection, where a different wavelength leads to a different reflection path length, and further leads to a different time delay. A principle of the true time delay unit based on spatial optical path switching is: An optical signal passes a controllable mirror, to change a quantity of times that light is reflected in space, so that different time delays are implemented when the optical signal passes through different optical paths.

With reference to the fifth implementation of the first aspect of this application, in a sixth implementation of the first aspect of this application, the electro-optic modulation module is an MZM, and the optical time delay module is a linearly chirped fiber grating time delay unit.

During specific implementation, the Mach-Zehnder electro-optic modulator (Mach-Zehnder Modulator, MZM) can process a signal having a relatively high bandwidth and relatively high optical power, has a wavelength-unrelated modulation feature, can better control modulation performance and modulate light intensity and a phase, can implement modulation at a high data rate higher than 40 Gbit/s, and becomes a generation basis of many advanced optical modulation formats. Therefore, an MZM may be used as the electro-optic modulation module. However, because the MZM has a non-linear phase modulation spectrum, during optical time delay processing, a linearly chirped fiber grating time delay unit needs to be used as the optical time delay module.

With reference to the fifth implementation of the first aspect of this application, in a seventh implementation of the first aspect of this application, the electro-optic modulation module is a PM, the optical time delay module is a linearly chirped fiber grating time delay unit, and the photoelectric conversion module includes an MZI and a dual-balanced photodetector.

During specific implementation, a phase electro-optic modulator (Phase Modulator, PM) may be used as the electro-optic modulation module. Because only a phase is considered when an electrical signal is converted into an optical signal, without considering light intensity, a linearly chirped fiber grating time delay unit is used as the optical time delay module. When an optical signal is converted into an electrical signal, the Mach-Zehnder interferometer (Mach-Zehnder Interferometer, MZI) is first used to convert an optical phase signal into an optical intensity signal, and the dual-balanced photodetector is then used to convert the optical intensity signal into the electrical signal and cancel noise.

A second aspect of this application provides a method for weight assignment in BF, applied to an apparatus for weight assignment in BF. The apparatus includes M optical carrier modules, M electro-optic modulation modules, M optical time delay modules, a splitting WDM, N photoelectric conversion modules, and an antenna array having k^{∗}N antenna units, where k, M, and N are integers greater than or equal to 1. The method includes:
generating, by the optical carrier module, an optical carrier having N different wavelengths;
modulating, by the electro-optic modulation module, an electrical signal onto the optical carrier, to obtain a modulated optical signal, where the electrical signal is a baseband electrical signal, an intermediate frequency electrical signal, or a radio frequency electrical signal;
performing, by the optical time delay module, time delay adjustment on the modulated optical signal;
performing, by the splitting WDM, splitting based on a wavelength of the modulated optical signal that undergoes the time delay adjustment, to obtain N paths of optical sub-signals;
converting, by the photoelectric conversion module, the N paths of optical sub-signals into N paths of electrical sub-signals, where
when the N paths of electrical sub-signals are baseband electrical signals or intermediate frequency electrical signals, the N paths of electrical sub-signals are up-converted to obtain N paths of radio frequency electrical signals; and
forming, by the antenna array, a plurality of beams having adjustable directions based on amplitude and phase weightings of the N paths of radio frequency electrical signals.

In a mobile communications system working at a high frequency, a transceiver of a communications device may integrate a plurality of antenna units. In an existing mobile communication standard, when information is sent, a directional beam needs to be implemented by forming an array by using a plurality of antenna units. The apparatus in this application includes the M optical carrier modules, the M electro-optic modulation modules, the M optical time delay modules, the splitting WDM, the N photoelectric conversion modules, and the antenna array having the k^{∗}N antenna units, where k, M, and N are integers greater than or equal to 1. The optical carrier module generates an optical carrier having N different wavelengths. The electro-optic modulation module modulates an electrical signal onto the optical carrier, to obtain a modulated optical signal, where the electrical signal may be one of a baseband electrical signal, an intermediate frequency electrical signal, and a radio frequency electrical signal. A specific type of the electrical signal depends on a previous processing manner of the electrical signal obtained by the apparatus in this application. In a first manner, a baseband module directly outputs a baseband electrical signal. In a second manner, after a baseband module outputs a baseband electrical signal, the baseband electrical signal is up-converted into an intermediate frequency electrical signal through a mixer. In a third manner, after a baseband module outputs a baseband electrical signal, the baseband electrical signal is up-converted into a radio frequency electrical signal through a mixer. After obtaining the modulated optical carrier, the optical time delay module performs time delay adjustment on the modulated optical signal, and the splitting WDM performs splitting based on a wavelength of the modulated optical signal that undergoes the time delay adjustment. Because the optical carrier has N different wavelengths, the modulated optical signal is split to obtain N paths of optical sub-signals. The photoelectric conversion module converts the N paths of optical sub-signals into N paths of electrical sub-signals, where whether the electrical sub-signals are baseband electrical signals, intermediate frequency electrical signals, or radio frequency electrical signals depends on the electrical signal received by the electro-optic modulation module. If the N paths of electrical sub-signals are radio frequency electrical signals, the antenna array radiates the N paths of radio frequency electrical signals based on amplitude and phase weightings of the N paths of radio frequency electrical signals, to form a plurality of beams having adjustable directions. If the N paths of electrical sub-signals are baseband electrical signals or intermediate frequency electrical signals, because the antenna array can radiate only a radio frequency electrical signal, the N paths of electrical sub-signals need to be up-converted, to obtain N paths of radio frequency electrical signals. Then, the antenna array forms a plurality of beams having adjustable directions based on amplitude and phase weightings of the N paths of radio frequency electrical signals. All or some of the k^{∗}N antenna units of the antenna array are configured to radiate the N paths of radio frequency electrical signals, thereby implementing beam transmission of an electrical signal. It is known that one electrical signal corresponds to a port electrical signal of one baseband port of the baseband module, and each electrical signal is implemented in such a way. Compared with existing conventional fully-connected BF, in this solution, optical time delay processing is performed on the electrical signal. Therefore, a power splitter is replaced with a splitting function of a WDM, and a quantity is obviously reduced. For example, in a case of four baseband ports and 128 antenna units, in the conventional fully-connected BF, 508 power splitters having a splitting function are required, and a power division insertion loss reaches 7 dB, while in this solution, only one WDM is required to implement a splitting function, and an insertion loss of the WDM is usually 0.5 dB. It can be learned that, a power division insertion loss of the apparatus for weight assignment in BF is obviously reduced. In addition, optical-to-electrical conversion for the electrical signal can effectively avoid electromagnetic interference between a power division network and each baseband port-antenna unit channel in the conventional fully-connected BF.

With reference to the second aspect of this application, in a first implementation of the second aspect of this application, the forming, by the antenna array, a plurality of beams having adjustable directions based on amplitude and phase weightings of the N paths of radio frequency electrical signals includes:
radiating, by the antenna array, the N paths of radio frequency electrical signals respectively by using the k^{∗}N antenna units based on the amplitude and phase weightings of the N paths of radio frequency electrical signals, to form the plurality of beams having the adjustable directions.

In the second aspect of this application, all or some of the k^{∗}N antenna units in the antenna array can be configured to radiate the N paths of radio frequency electrical signals. In this embodiment, all of the k^{∗}N antenna units in the antenna array need to be used to radiate the N paths of radio frequency electrical signals. The radiation is based on the amplitude and phase weightings of the N paths of radio frequency electrical signals. Therefore, beams in a plurality of directions can be formed. Compared with existing subarray-connected BF, in this solution, all antenna units in the antenna array are used, and gains of the antenna units in the antenna array are fully used, thereby improving a capacity.

With reference to the first implementation of the second aspect of this application, in a second implementation of the second aspect of this application, the optical carrier module includes a combining WDM and N tunable lasers, where preset wavelengths of the N tunable lasers are different from each other; and
the generating, by the optical carrier module, an optical carrier having N different wavelengths includes:
generating, by each of the N tunable lasers, an optical wave, to obtain N optical waves having different wavelengths; and
combining, by the combining WDM, the N optical waves having the different wavelengths, to obtain the optical carrier.

A specific process of generating, by the optical carrier module, the optical carrier of the N wavelengths mentioned in the second aspect of this application is: The N tunable lasers are preset, and the preset wavelengths of the tunable lasers may be set in advance. In addition, the preset wavelengths are different from each other. In a specific implementation process, the tunable laser may further change a wavelength of a generated optical wave through adjustment. After the N tunable lasers generate the N independent optical waves having the different wavelengths, a combining WDM is further required to perform wavelength division multiplexing on the optical waves, to obtain the optical carrier of N wavelengths through combination. Therefore, on a basis of one splitting WDM, M combining WDMs further need to be added. In the case of four baseband ports and 128 antenna units, only four combining WDMs are required in this solution. Compared with 384 combiners in the conventional fully-connected BF, a combining loss is obviously less than that in the conventional fully-connected BF.

With reference to the first implementation of the second aspect of this application, in a third implementation of the second aspect of this application, the optical carrier module includes a tunable laser, an optical circulator, and an optical resonant microcavity; and
the generating, by the optical carrier module, an optical carrier having N different wavelengths includes:
generating, by the tunable laser, an optical wave of a preset single wavelength;
transmitting, by the optical circulator, the optical wave to the optical resonant microcavity, and preventing the optical wave input to the optical resonant microcavity from being reflected back to the tunable laser; and
generating, by the optical resonant microcavity, resonance for the input optical wave, to obtain the optical carrier having N different wavelengths that are at equal intervals.

The generating, by the optical carrier module, the optical carrier of the N wavelengths mentioned in the second aspect of this application may be implemented by using a tunable laser, an optical circulator, and an optical resonant microcavity. A tunable laser is preset, and a preset wavelength of the tunable laser may be set in advance. In a specific implementation process, the tunable laser may further change a wavelength of a generated optical wave through adjustment. After the tunable laser generates the optical wave of the preset single wavelength, the optical circulator transmits the optical wave to the optical resonant microcavity, and prevents the optical wave input to the optical resonant microcavity from being reflected back to the tunable laser. The optical resonant microcavity generates resonance for the input optical wave, and outputs an optical carrier having N different wavelengths that are at equal intervals. On a basis of one splitting WDM, no WDM needs to be added, and a combining loss is obviously less than that in the conventional fully-connected BF.

With reference to the second aspect of this application, the first implementation of the second aspect, the second implementation of the second aspect, or the third implementation of the second aspect, in a fourth implementation of the second aspect of this application, when the N paths of electrical sub-signals are baseband electrical signals or intermediate frequency electrical signals, the apparatus further includes an LO and N mixers, where
that the N paths of electrical sub-signals are up-converted to obtain N paths of radio frequency electrical signals includes:
generating, by the LO, a local oscillator signal; and
up-converting, by the N mixers, the N paths of electrical signals based on the local oscillator signal, to obtain N paths of radio frequency electrical signals.

When an electrical signal is a baseband electrical signal or an intermediate frequency electrical signal, the N paths of electrical sub-signals are essentially baseband electrical signals or intermediate frequency electrical signals. To enable the antenna array to radiate the N paths of electrical sub-signals, the N paths of electrical sub-signals need to be respectively converted into N paths of radio frequency electrical signals. A specific process is that, an LO generates a local oscillator signal, and then a mixer up-converts and modulates the N paths of electrical sub-signals by using the local oscillator signal, to obtain N paths of radio frequency signals. In this way, the N paths of electrical sub-signals can be transmitted by using the antenna array after being up-converted and modulated.

With reference to the fourth implementation of the second aspect of this application, in a fifth implementation of the second aspect of this application, the apparatus further includes N power amplifiers PAs; and
before the forming, by the antenna array, a plurality of beams having adjustable directions based on amplitude and phase weightings of the N paths of radio frequency electrical signals, the method further includes:
performing, by the N PAs, power amplification on the N paths of radio frequency electrical signals respectively.

Before the antenna array transmits a signal, in consideration of problems such as propagation attenuation of the signal, power amplification needs to be performed. Therefore, before each path of radio frequency electrical signal is transmitted, power amplification needs to be performed by using a PA. Then, the N paths of radio frequency electrical signals are respectively transmitted by using the k^{∗}N antenna units.

### BRIEF DESCRIPTION OF DRAWINGS

FIG. 1 is a schematic structural diagram of existing subarray-connected BF;
FIG. 2 is a schematic structural diagram of conventional fully-connected BF;
FIG. 3 is a schematic structural diagram of an embodiment of an apparatus for weight assignment in BF according to this application;
FIG. 4 is a schematic structural diagram of another embodiment of an apparatus for weight assignment in BF according to this application;
FIG. 5 is a schematic structural diagram of still another embodiment of an apparatus for weight assignment in BF according to this application;
FIG. 6 is a schematic structural diagram of still another embodiment of an apparatus for weight assignment in BF according to this application;
FIG. 7 is a schematic structural diagram of yet another embodiment of an apparatus for weight assignment in BF according to this application; and
FIG. 8 is a schematic flowchart of an embodiment of a method for weight assignment in BF according to this application.

### DESCRIPTION OF EMBODIMENTS

This application provides a method and an apparatus for weight assignment in BF, to reduce a power division insertion loss of the BF and avoid electromagnetic interference between a power division network and each baseband port-antenna unit channel.

The technical solutions in this application are clearly and completely described below with reference to the accompanying drawings in this application.

First, a system architecture or a scenario used in this application is briefly described.

Because there are a large quantity of bandwidth resources in a high-frequency band, use of the high-frequency band in 5G mobile communication to increase a data rate is considered. For example, use of both centimeter wave bands and millimeter wave bands, such as 15 GHz, 28 GHz, 38 GHz, 60 GHz, and 73 GHz, in an access or a backhaul system in the 5G mobile communication is considered. In addition to a capability of providing a higher bandwidth, the high-frequency band further has a very small wavelength, and an antenna unit configured to transmit a signal is small in size. Therefore, a transceiver may integrate a plurality of antenna units. However, compared with a low-frequency band below 3 GHz, transmission losses of centimeter waves and millimeter waves are excessively high.

To reduce a high-frequency transmission loss, usually, output power of a power amplifier of a transceiver and an antenna gain of the transceiver need to be increased. Because an antenna unit used for a high frequency is small in size, a plurality of antenna units form an array to implement a directional beam. This can increase a gain and received signal power of a transceiver antenna. This method is also referred to as beamforming. Beamforming is one of main technical methods for reducing a high-frequency transmission loss. In consideration of disadvantages such as high hardware costs, high baseband calculation complexity, and high power consumption of DBF, only BF that becomes a mainstream solution for a high-frequency band and of which complexity, costs, and power consumption are gradually reduced is considered in this application. In BF, an amplitude and a phase of each radio frequency channel signal is adjusted by adjusting a phase shift value of a phase shifter, a time delay value of a time delay unit, or a gain value of a tunable gain amplifier, thereby changing a beam direction.

In the existing conventional fully-connected BF architecture shown in FIG. 2, each baseband port is connected to all antenna subarrays. For example, baseband electrical signals output from baseband ports 1 and 2 are converted into intermediate frequency electrical signals through an LPF and an AMP, and then the intermediate frequency electrical signals are up-converted into radio frequency electrical signals through a mixer. In a power division network, two paths of radio frequency electrical signals need to be obtained through splitting by using a 1xN power splitter. In an antenna subarray 1, a combiner needs to be used to combine a path of radio frequency electrical signal from the baseband port 1 and a path of radio frequency electrical signal from the baseband port 2. Compared with the subarray-connected BF shown in FIG. 1, the existing conventional fully-connected BF architecture makes better use of a gain of an antenna array in a case of a same array size and a same baseband port. However, there are a large quantity of power splitters, leading to a relatively large insertion loss and a complex power division network, and causing electromagnetic interference to a baseband port-antenna unit channel. Details are shown in the following Table 1.

**Table 1**

| Quantity of baseband ports | Quantity of antenna units | Quantity of power splitters | Power division insertion loss | Combining insertion loss |
|---|---|---|---|---|
| 2 | 32 | 2^{∗}31+1^{∗}32=94 | 5 dB | 1 dB |
| | 64 | 2^{∗}63+1^{∗}64=190 | 6 dB | 1 dB |
| | 128 | 2^{∗}127+1^{∗}128=382 | 7 dB | IdB |
| 4 | 32 | 4^{∗}31+3^{∗}32=220 | 5 dB | 2 dB |
| | 64 | 4^{∗}63+3^{∗}64=444 | 6 dB | 2 dB |
| | 128 | 4^{∗}127+3^{∗}128=892 | 7 dB | 2 dB |

It can be learned from Table 1 that, in the conventional fully-connected BF, in a case of four baseband ports and 128 antenna subarrays, 4^{∗}127 power splitters and 3^{∗}128 combiners are required. Because a combiner is a type of a power splitter, a quantity of power splitters reaches up to 892. A power division insertion loss caused by the power splitters reaches 7 dB and a combining insertion loss reaches 2 dB.

To resolve problems such as a large quantity of power splitters, a large insertion loss, and serious electromagnetic interference between a power division network and each baseband port-antenna subarray channel that are caused by the conventional fully-connected BF, this application provides fully-connected BF using an optical time delay. The following first describes an apparatus for implementing fully-connected BF in this application in detail.

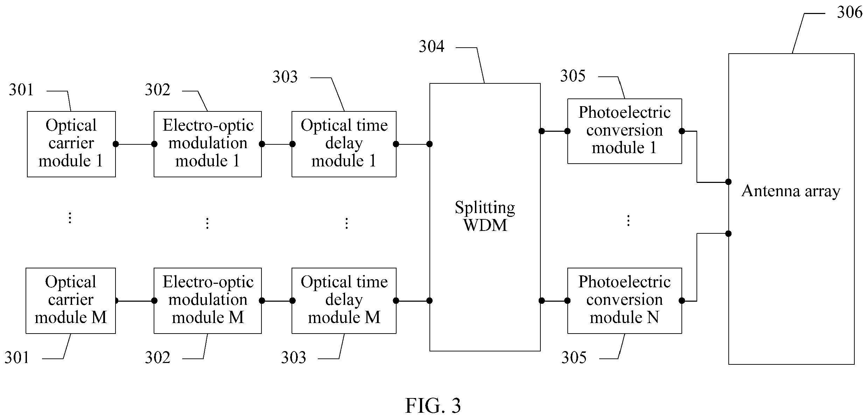

Referring to FIG. 3, an embodiment of this application provides an apparatus for weight assignment in BF, including:
M optical carrier modules 301, M electro-optic modulation modules 302, M optical time delay modules 303, a splitting WDM 304, N photoelectric conversion modules 305, and an antenna array 306 having k^{∗}N antenna units, where k, M, and N are integers greater than or equal to 1.

The optical carrier module 301 is configured to generate an optical carrier having N different wavelengths.

The electro-optic modulation module 302 is configured to modulate an electrical signal onto the optical carrier generated by the optical carrier module 301, to obtain a modulated optical signal, where the electrical signal is a baseband electrical signal, an intermediate frequency electrical signal, or a radio frequency electrical signal.

The optical time delay module 303 is configured to perform time delay adjustment on the modulated optical signal generated by the electro-optic modulation module 302.

The splitting WDM 304 is configured to perform splitting based on a wavelength of the modulated optical signal on which time delay adjustment has been performed by the optical time delay module 303, to obtain N paths of optical sub-signals.

The photoelectric conversion module 305 is configured to convert the N paths of optical sub-signals obtained by the splitting WDM 304 into N paths of electrical sub-signals.

When the N paths of electrical sub-signals obtained by the splitting WDM 304 are baseband electrical signals or intermediate frequency electrical signals, the N paths of electrical sub-signals are up-converted to obtain N paths of radio frequency electrical signals.

The antenna array 306 is configured to form a plurality of beams having adjustable directions based on amplitude and phase weightings of the N paths of radio frequency electrical signals.

In this embodiment of this application, in a mobile communications system working at a high frequency, a transceiver of a communications device may integrate a plurality of antenna units. In an existing mobile communication standard, when information is sent, a directional beam needs to be implemented by forming an array by using a plurality of antenna units. The apparatus for weight assignment in BF includes the M optical carrier modules 301, the M electro-optic modulation modules 302, the M optical time delay modules 303, the splitting WDM 304, the N photoelectric conversion modules 305, and the antenna array 306 having the k^{∗}N antenna units, where k, M, and N are integers greater than or equal to 1.

The optical carrier module 301 generates an optical carrier having N different wavelengths. The electro-optic modulation module 302 modulates an electrical signal onto the optical carrier, to obtain a modulated optical signal, where the electrical signal may be one of a baseband electrical signal, an intermediate frequency electrical signal, and a radio frequency electrical signal. A specific type of the electrical signal depends on a previous processing manner of the electrical signal received by the electro-optic modulation module 302. That is, how the electrical signal is obtained is determined. In a first manner, the electrical signal is a baseband electrical signal. In this case, it indicates that the electrical signal is directly output by a baseband module by using a baseband port, where the baseband module may be or may not be integrated in the apparatus in this application, and one baseband port is connected to one electro-optic modulation module 302. In a second manner, the electrical signal is an intermediate frequency electrical signal. In this case, after a baseband module outputs a baseband electrical signal, the baseband electrical signal is up-converted through a mixer, so that the baseband electrical signal turns into an intermediate frequency electrical signal. In a third manner, the electrical signal is a radio frequency electrical signal. After a baseband module outputs a baseband electrical signal, the baseband electrical signal is up-converted through a mixer, so that the baseband electrical signal turns into a radio frequency electrical signal.

After the electro-optic modulation module 302 obtains the modulated optical carrier, the optical time delay module 303 performs time delay adjustment on the modulated optical signal, and the splitting WDM 304 performs splitting based on a wavelength of the modulated optical signal that undergoes the time delay adjustment. Because the optical carrier has N different wavelengths, the modulated optical signal is split to obtain N paths of optical sub-signals. The photoelectric conversion module 305 converts the N paths of optical sub-signals into N paths of electrical sub-signals, where whether the electrical sub-signals are baseband electrical signals, intermediate frequency electrical signals, or radio frequency electrical signals depends on the electrical signal received by the electro-optic modulation module 302. If the N paths of electrical sub-signals are radio frequency electrical signals, the antenna array 306 radiates the N paths of radio frequency electrical signals based on amplitude and phase weightings of the N paths of radio frequency electrical signals, to form a plurality of beams having adjustable directions. If the N paths of electrical sub-signals are baseband electrical signals or intermediate frequency electrical signals, because the antenna array 306 can radiate only a radio frequency electrical signal, the N paths of electrical sub-signals need to be up-converted, to obtain N paths of radio frequency electrical signals. Then, the antenna array 306 forms a plurality of beams having adjustable directions based on amplitude and phase weightings of the N paths of radio frequency electrical signals. All or some of the k^{∗}N antenna units of the antenna array 306 are configured to radiate the N paths of radio frequency electrical signals, thereby implementing beam transmission of an electrical signal. It is known that one electrical signal corresponds to a port electrical signal of one baseband port of the baseband module, and each electrical signal is implemented in such a way.

In conclusion, compared with existing conventional fully-connected BF, in this solution, optical time delay processing is performed on the electrical signal. Therefore, a power splitter is replaced with a splitting function of a WDM, and a quantity is obviously reduced. For example, in a case of four baseband ports and 128 antenna units, in the conventional fully-connected BF, 508 power splitters having a splitting function are required, and a power division insertion loss reaches 7 dB, while in this solution, only one WDM is required to implement a splitting function, and an insertion loss of the WDM is usually 0.5 dB. It can be learned that a power division insertion loss is obviously reduced. In addition, optical-to-electrical conversion for the electrical signal can effectively avoid electromagnetic interference between a power division network and each baseband port-antenna unit channel in the conventional fully-connected BF.

Optionally, in some embodiments of this application, the antenna array 306 radiates the N paths of radio frequency electrical signals respectively by using the k^{∗}N antenna units based on the amplitude and phase weightings of the N paths of radio frequency electrical signals, to form the plurality of beams having the adjustable directions.

In this embodiment, all of the k^{∗}N antenna units in the antenna array 306 need to be used to radiate the N paths of radio frequency electrical signals. The radiation is based on the amplitude and phase weightings of the N paths of radio frequency electrical signals. Therefore, beams in a plurality of directions can be formed. Compared with existing subarray-connected BF, in this solution, all antenna units in the antenna array 306 are used, and gains of the antenna units in the antenna array 306 are fully used, thereby improving a capacity.

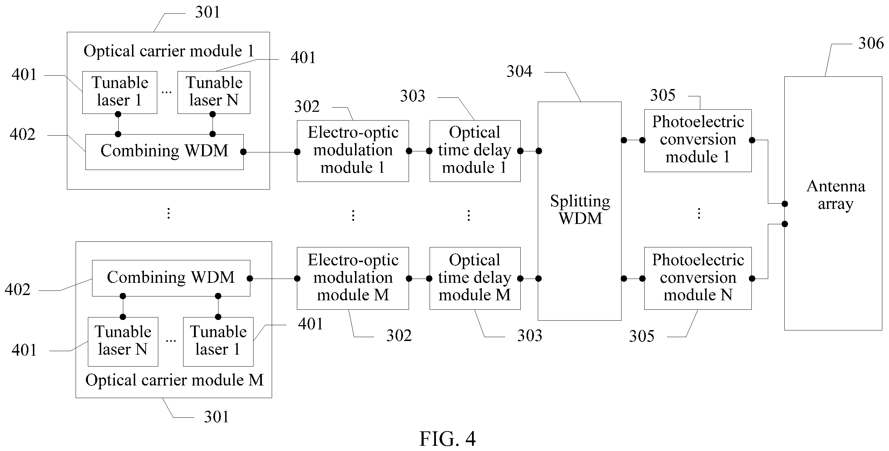

Optionally, as shown in FIG. 4, in some embodiments of this application, the optical carrier module 301 includes a combining WDM 402 and N tunable lasers 401, where preset wavelengths of the N tunable lasers 401 are different from each other.

The tunable laser 401 is configured to generate an optical wave.

The combining WDM 402 is configured to combine the N optical waves having the different wavelengths generated by the N tunable lasers 401, to obtain the optical carrier.

In this embodiment, the optical carrier module 301 may specifically include the combining WDM 402 and the N tunable lasers 401. The preset wavelengths of the tunable lasers 401 may be set in advance, and the preset wavelengths are different from each other. In a specific implementation process, the tunable laser 401 may further change a wavelength of a generated optical wave through adjustment. After the N tunable lasers 401 generate the N independent optical waves having the different wavelengths, the combining WDM 402 further needs to perform wavelength division multiplexing on the optical waves, to obtain the optical carrier of N wavelengths through combination. Therefore, on a basis of one splitting WDM 305, M combining WDMs 402 further need to be added in this solution. In the case of four baseband ports and 128 antenna units, four combining WDMs 402 are required in this solution. Compared with 384 combiners in the conventional fully-connected BF, a combining loss is obviously less than that in the conventional fully-connected BF.

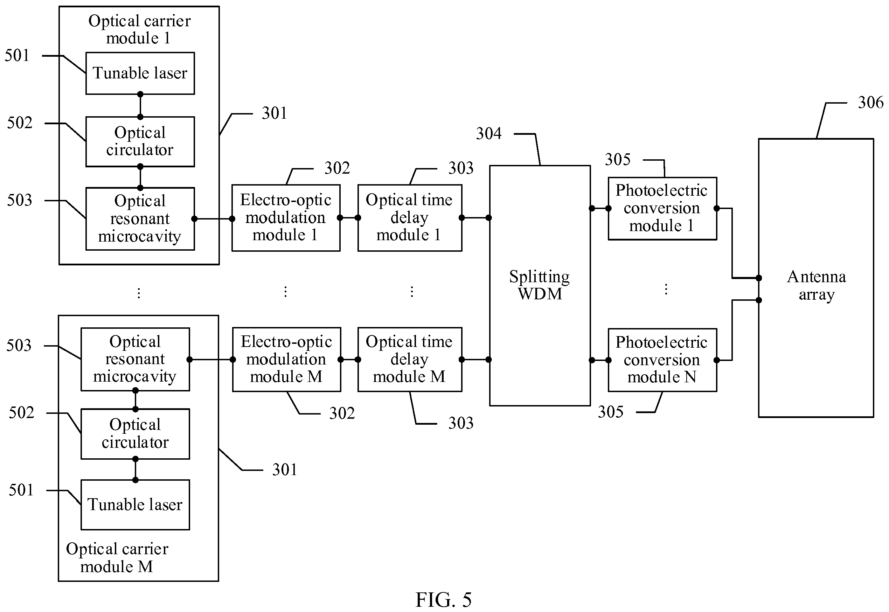

Optionally, as shown in FIG. 5, in some embodiments of this application, the optical carrier module 301 includes a tunable laser 501, an optical circulator 502, and an optical resonant microcavity 503.

The tunable laser 501 is configured to generate an optical wave of a preset single wavelength.

The optical circulator 502 is configured to: transmit the optical wave generated by the tunable laser 501 to the optical resonant microcavity 503, and prevent the optical wave input to the optical resonant microcavity 503 from being reflected back to the tunable laser 501.

The optical resonant microcavity 503 is configured to generate resonance for the input optical wave, to obtain the optical carrier having N different wavelengths that are at equal intervals.

In this embodiment, a tunable laser 501 is preset, and a preset wavelength of the tunable laser 501 may be set in advance. In a specific implementation process, the tunable laser 501 may further change a wavelength of a generated optical wave through adjustment. After the tunable laser 501 generates the optical wave of the preset single wavelength, the optical circulator 502 transmits the optical wave to the optical resonant microcavity, and prevents the optical wave input to the optical resonant microcavity from being reflected back to the tunable laser 501. The optical resonant microcavity 503 generates resonance for the input optical wave, to obtain the optical carrier having N different wavelengths that are at equal intervals. In this solution, on a basis of one splitting WDM 305, no additional WDM needs to be added for combination. In the case of four baseband ports and 128 antenna units, compared with 384 combiners in the conventional fully-connected BF, a combining loss is obviously less than that in the conventional fully-connected BF.

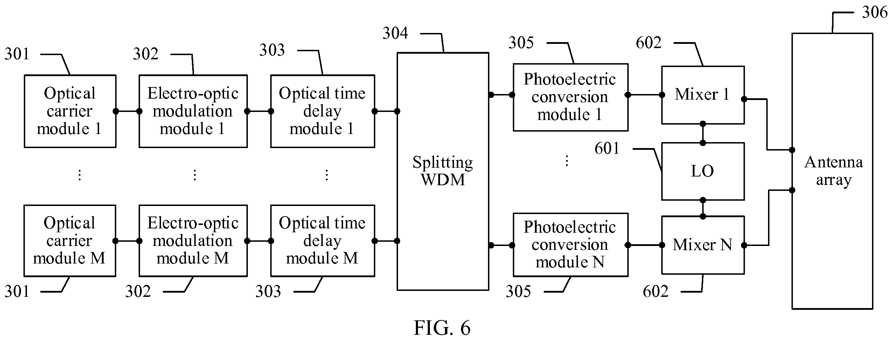

Optionally, as shown in FIG. 6, in some embodiments of this application, when the N paths of electrical sub-signals are baseband electrical signals or intermediate frequency electrical signals, the apparatus further includes an LO 601 and N mixers 602.

The LO 601 is configured to generate a local oscillator signal.

The N mixers 602 are configured to up-convert the N paths of electrical signals based on the local oscillator signal, to obtain N paths of radio frequency signals.

In this embodiment, when an electrical signal is a baseband electrical signal or an intermediate frequency electrical signal, the N paths of electrical sub-signals are essentially baseband electrical signals or intermediate frequency electrical signals. To enable the antenna array 306 to radiate the N paths of electrical sub-signals, the N paths of electrical sub-signals need to be respectively converted into N paths of radio frequency electrical signals. A specific process is that, an LO 601 generates a local oscillator signal, then a mixer 602 up-converts and modulates the N paths of electrical sub-signals by using the local oscillator signal, to obtain N paths of radio frequency signals. In this way, the N paths of electrical sub-signals can be transmitted by using the antenna array 306 after being up-converted and modulated.

Optionally, in some embodiments of this application, the apparatus further includes N PAs.

The N PAs are configured to perform power amplification on the N paths of radio frequency electrical signals respectively.

In this embodiment, before the antenna array 306 transmits the N paths of radio frequency electrical signals, in consideration of problems such as propagation attenuation of the signal, power amplification needs to be performed. Therefore, before each path of radio frequency electrical signal is transmitted by an antenna unit, power amplification needs to be performed by using a PA. Then, the N paths of electrical signals are respectively transmitted by using the k^{∗}N antenna units.

Optionally, in some embodiments of this application, the optical time delay module 304 is an optical fiber true time delay unit based on an electric switch, an optical fiber true time delay unit based on an optical switch, a linearly chirped fiber grating time delay unit, or a true time delay unit based on spatial optical path switching.

In this embodiment, in consideration of that an optical true time delay unit 304 has advantages such as a low loss, no electromagnetic interference, and an ultra wideband, the optical time delay module 304 uses an optical true time delay unit. Currently, there are many common optical true time delay units, such as the optical fiber true time delay unit based on the electric switch, the optical fiber true time delay unit based on the optical switch, the linearly chirped fiber grating time delay unit, and the true time delay unit based on spatial optical path switching. A principle of the optical fiber true time delay unit based on the electric switch is: An optical signal passes through an OTTD, and the OTTD selects, based on a time delay requirement, optical fiber rings of different lengths by using an electric switch, to perform time delay processing on the optical signal. A principle of the optical fiber true time delay unit based on the optical switch is similar to that of the optical fiber true time delay unit based on the electric switch. A difference lies in that the optical fiber true time delay unit based on the optical switch selects optical fiber rings of different lengths based on an optical switch. A principle of the linearly chirped fiber grating time delay unit is: An optical signal passes through a linearly chirped fiber grating for reflection, where a different wavelength leads to a different reflection path length, and further leads to a different time delay. A principle of the true time delay unit based on spatial optical path switching is: An optical signal passes a controllable mirror, to change a quantity of times that light is reflected in space, so that different time delays are implemented when the optical signal passes through different optical paths.

Optionally, in some embodiments of this application, the electro-optic modulation module 302 is an MZM, and the optical time delay module 303 is a linearly chirped fiber grating time delay unit.

In this embodiment, during specific implementation, the MZM can process a signal having a relatively high bandwidth and relatively high optical power, has a wavelength-unrelated modulation feature, can better control modulation performance and modulate light intensity and a phase, can implement modulation at a high data rate higher than 40 Gbit/s, and becomes a generation basis of many advanced optical modulation formats. Therefore, an MZM may be used as the electro-optic modulation module 302. However, because the MZM has a non-linear phase modulation spectrum, during optical time delay processing, a linearly chirped fiber grating time delay unit needs to be used as the optical time delay module 303.

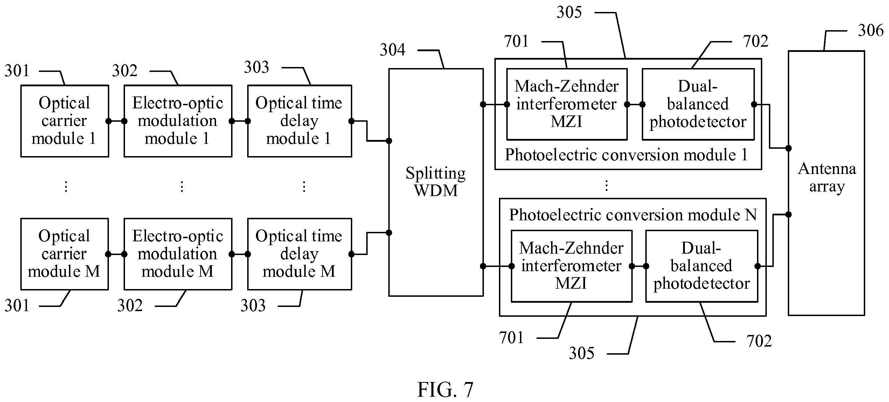

Optionally, as shown in FIG. 7, in some embodiments of this application, the electro-optic modulation module 302 is a PM, the optical time delay module 303 is a linearly chirped fiber grating time delay unit, and the photoelectric conversion module 305 includes an MZI 701 and a dual-balanced photodetector 702.

In this embodiment, during specific implementation, a PM may be used as the electro-optic modulation module 302. Because only a phase is considered when an electrical signal is converted into an optical signal, without considering light intensity, a linearly chirped fiber grating time delay unit is used as the optical time delay module 303. When an optical signal is converted into an electrical signal, the MZI 701 is first used to convert an optical phase signal into an optical intensity signal, and the dual-balanced photodetector 702 is then used to convert the optical intensity signal into the electrical signal and cancel noise, thereby modulating the optical signal into the electrical signal.

It should be noted that in the foregoing apparatus embodiment, during actual application, the baseband module may be a baseband processor of the apparatus. Alternatively, a signal generator sends a signal to the baseband module so that the signal is processed into a port electrical signal. Details are not limited.

The foregoing embodiment describes the apparatus for weight assignment in BF in this application. In the following, the method for weight assignment in BF applied to the apparatus is described in detail by using an embodiment.

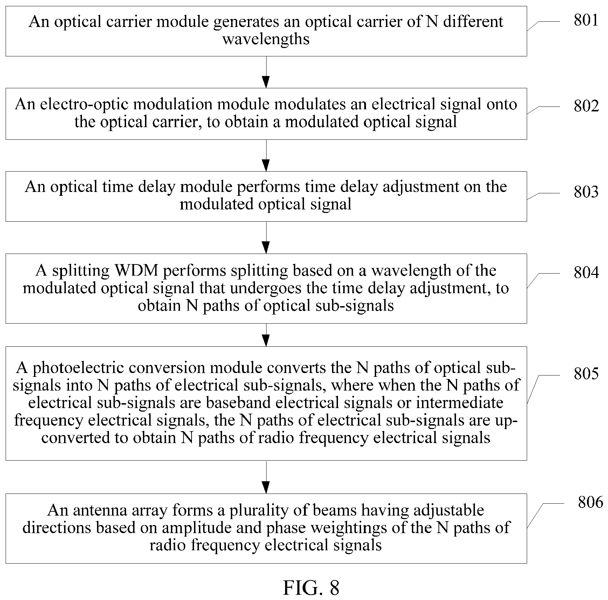

Referring to FIG. 8, an embodiment of this application provides a method for weight assignment in BF, applied to the apparatus for weight assignment in BF shown in FIG. 3. The method includes the following steps.

801. An optical carrier module generates an optical carrier having N different wavelengths.

In this embodiment, the apparatus for weight assignment in BF includes M optical carrier modules, M electro-optic modulation modules, M optical time delay modules, a splitting WDM, N photoelectric conversion modules, and an antenna array having k^{∗}N antenna units, where k, M, and N are integers greater than or equal to 1. Because there are N photoelectric conversion modules connected to the antenna array, the optical carrier generated by the optical carrier module needs to have N different wavelengths.

802. An electro-optic modulation module modulates an electrical signal onto the optical carrier, to obtain a modulated optical signal.

In this embodiment, the electro-optic modulation module 302 modulates the electrical signal onto the optical carrier, to obtain the modulated optical signal, where the electrical signal may be one of a baseband electrical signal, an intermediate frequency electrical signal, and a radio frequency electrical signal. A specific type of the electrical signal depends on a previous processing manner of the electrical signal received by the electro-optic modulation module. That is, how the electrical signal is obtained is determined. In a first manner, the electrical signal is a baseband electrical signal. In this case, it indicates that the electrical signal is directly output by a baseband module by using a baseband port, where the baseband module may be or may not be integrated in the apparatus in this application, and one baseband port is connected to one electro-optic modulation module. In a second manner, the electrical signal is an intermediate frequency electrical signal. In this case, after a baseband module outputs a baseband electrical signal, the baseband electrical signal is up-converted through a mixer, so that the baseband electrical signal turns into an intermediate frequency electrical signal. In a third manner, the electrical signal is a radio frequency electrical signal. After a baseband module outputs a baseband electrical signal, the baseband electrical signal is up-converted through a mixer, so that the baseband electrical signal turns into a radio frequency electrical signal. Because the optical carrier has N different wavelengths, the modulated optical signal also has N different wavelengths.

803. An optical time delay module performs time delay adjustment on the modulated optical signal.

In this embodiment, the optical time delay module performs time delay adjustment on the modulated optical signal output by the electro-optic modulation module. Because the modulated optical signal has N different wavelengths, the modulated optical signal can be time-delayed to different degrees when passing through the optical time delay module, provided that the optical time delay module selects optical fiber rings of different lengths by using an electric switch or an optical switch based on a time delay requirement.

804. A splitting WDM performs splitting based on a wavelength of the modulated optical signal that undergoes the time delay adjustment, to obtain N paths of optical sub-signals.

In this embodiment, when the modulated optical signal that undergoes the time delay adjustment passes through the splitting WDM, because the modulated optical signal has N different wavelengths, the splitting WDM splits, through wavelength division multiplexing, the modulated optical signal of the N different wavelengths into N paths of optical sub-signals having different wavelengths.

805. A photoelectric conversion module converts the N paths of optical sub-signals into N paths of electrical sub-signals, where when the N paths of electrical sub-signals are baseband electrical signals or intermediate frequency electrical signals, the N paths of electrical sub-signals are up-converted to obtain N paths of radio frequency electrical signals.

In this embodiment, because all of the N paths of optical sub-signals are optical signals, the antenna array cannot transmit the N paths of optical sub-signals. In this case, the photoelectric conversion module needs to modulate the N paths of optical sub-signals into the N paths of electrical sub-signals respectively. Whether the electrical sub-signal is a baseband electrical signal, an intermediate frequency electrical signal, or a radio frequency electrical signal depends on the electrical signal received by the electro-optic modulation module in step 802. If the N paths of electrical sub-signals are radio frequency electrical signals, the N paths of electrical sub-signals do not need to be processed. If the N paths of electrical sub-signals are baseband electrical signals or intermediate frequency electrical signals, because the antenna array can radiate only a radio frequency electrical signal, the N paths of electrical sub-signals need to be up-converted into N paths of radio frequency electrical signals.

806. An antenna array forms a plurality of beams having adjustable directions based on amplitude and phase weightings of the N paths of radio frequency electrical signals.

In this embodiment, all or some of the k^{∗}N antenna units of the antenna array are configured to radiate the N paths of radio frequency electrical signals, thereby implementing beam transmission of an electrical signal and forming a plurality of beams having adjustable directions. During specific implementation, power amplification usually further needs to be performed on the electrical signal. This is the same as that in the prior art, and is not described in detail. All or some of the k^{∗}N antenna units of the antenna array transmit the N paths of radio frequency electrical signals. Because beam directions of the transmitted N paths of radio frequency electrical signals have been adjusted, beams are directional, thereby completing beamforming of the electrical signal.

In this embodiment of this application, compared with existing conventional fully-connected BF, in this solution, optical time delay processing is performed on the electrical signal. Therefore, a power splitter is replaced with a splitting function of a WDM, and a quantity is obviously reduced. For example, in a case of four baseband ports and 128 antenna units, in the conventional fully-connected BF, 508 power splitters having a splitting function are required, and a power division insertion loss reaches 7 dB, while in this solution, only one WDM is required to implement a splitting function, and an insertion loss of the WDM is usually 0.5 dB. It can be learned that, a power division insertion loss is obviously reduced. In addition, optical-to-electrical conversion for the electrical signal can effectively avoid electromagnetic interference between a power division network and each baseband port-antenna unit channel in the conventional fully-connected BF.

Optionally, in some embodiments of this application, the antenna array radiates the N paths of radio frequency electrical signals respectively by using the k^{∗}N antenna units based on the amplitude and phase weightings of the N paths of radio frequency electrical signals, to form the plurality of beams having the adjustable directions.

In this embodiment of this application, all or some of the k^{∗}N antenna units in the antenna array 306 in step 806 in the method embodiment in FIG. 8 may be used. In this embodiment, all of the k^{∗}N antenna units in the antenna array need to be used to radiate the N paths of radio frequency electrical signals. The radiation is based on the amplitude and phase weightings of the N paths of radio frequency electrical signals. Therefore, beams in a plurality of directions can be formed. Compared with existing subarray-connected BF, in this solution, all antenna units in the antenna array are used, and gains of the antenna units in the antenna array are fully used, thereby improving a capacity.

In the foregoing method embodiment in FIG. 8, the optical carrier of the N wavelengths is an important condition of implementing this application. The generating, by the optical carrier module, an optical carrier having N different wavelengths may be specifically implemented by using N tunable lasers and a combining WDM, or by using a tunable laser, an optical circulator, and an optical resonant microcavity. Details are described below.

Optionally, with reference to the apparatus embodiment shown in FIG. 4, in some embodiments of this application, the optical carrier module includes a combining WDM and N tunable lasers, where preset wavelengths of the N tunable lasers are different from each other.

The generating, by the optical carrier module, an optical carrier having N different wavelengths includes:
generating, by each of the N tunable lasers, an optical wave, to obtain N optical waves having different wavelengths; and
combining, by the combining WDM, the N optical waves having the different wavelengths, to obtain the optical carrier.

In this embodiment of this application, tunable lasers of N different wavelengths are preset, and the preset wavelengths of the tunable lasers may be set in advance. In addition, the preset wavelengths are different from each other. In a specific implementation process, the tunable laser may further change a wavelength of a generated optical wave through adjustment. After the N tunable lasers generate the N independent optical waves having the different wavelengths, a combining WDM is further required to perform wavelength division multiplexing on the optical waves, to obtain the optical carrier of N wavelengths through combination. Therefore, on a basis of one splitting WDM, M combining WDMs further need to be added. In the case of four baseband ports and 128 antenna units, only four combining WDMs are required in this solution. Compared with 384 combiners in the conventional fully-connected BF, a combining loss is obviously less than that in the conventional fully-connected BF.

Optionally, with reference to the apparatus embodiment shown in FIG. 4, in some embodiments of this application, the optical carrier module includes a tunable laser, an optical circulator, and an optical resonant microcavity.

The generating, by the optical carrier module, an optical carrier includes:
generating, by the tunable laser, an optical wave of a preset single wavelength;
transmitting, by the optical circulator, the optical wave to the optical resonant microcavity, and preventing the optical wave input to the optical resonant microcavity from being reflected back to the tunable laser; and
generating, by the optical resonant microcavity, resonance for the input optical wave, to obtain the optical carrier having N different wavelengths that are at equal intervals.

In this embodiment of this application, the optical carrier module includes the tunable laser, the optical circulator, and the optical resonant microcavity. The optical circulator is a multi-port optical device having non-reciprocity. The optical signal transmits, from a particular port, the optical wave to the optical resonant microcavity at a very small loss. The optical wave reflected by the optical resonant microcavity has a very large loss at the particular port or other ports, thereby preventing the optical wave input to the optical resonant microcavity from being reflected back to the tunable laser. The optical resonant microcavity generates resonance for the input optical wave, thereby inputting an optical frequency comb, that is, the optical carrier, of a plurality of wavelengths that are at equal intervals. On a basis of one splitting WDM, no additional combining WDM needs to be added, and a combining loss is obviously less than that in the conventional fully-connected BF.

The foregoing embodiments are all for a port electrical signal in a high-frequency state. If the port electrical signal is an intermediate-frequency signal, a processing process is different, and details are as follows:

Optionally, with reference to the apparatus embodiment shown in FIG. 5, in some embodiments of this application, when the N paths of electrical sub-signals are baseband electrical signals or intermediate frequency electrical signals, the apparatus further includes a local oscillator LO and N mixers.

That the N paths of electrical sub-signals are up-converted to obtain N paths of radio frequency electrical signals includes:
generating, by the LO, a local oscillator signal; and
up-converting, by the N mixers, the N paths of electrical signals based on the local oscillator signal, to obtain N paths of radio frequency electrical signals.

In this embodiment of this application, when an electrical signal is a baseband electrical signal or an intermediate frequency electrical signal, the N paths of electrical sub-signals are essentially baseband electrical signals or intermediate frequency electrical signals. To enable the antenna array to radiate the N paths of electrical sub-signals, the N paths of electrical sub-signals need to be respectively converted into N paths of radio frequency electrical signals. A specific process is that, an LO generates a local oscillator signal, and then a mixer up-converts and modulates the N paths of electrical sub-signals by using the local oscillator signal, to obtain N paths of radio frequency signals. In this way, the N paths of electrical sub-signals can be transmitted by using the antenna array after being up-converted and modulated.

Optionally, in some embodiments of this application, the apparatus further includes N power amplifiers PAs.

Before the forming, by the antenna array, a plurality of beams having adjustable directions based on amplitude and phase weightings of the N paths of radio frequency electrical signals, the method further includes:
performing, by the N PAs, power amplification on the N paths of radio frequency electrical signals respectively.

In this embodiment of this application, before the antenna array sends a signal, in consideration of problems such as propagation attenuation of the signal, power amplification needs to be performed. Therefore, before each path of electrical signal is transmitted, power amplification needs to be performed by using a PA. Then, the N paths of radio frequency electrical signals are respectively sent by using the k^{∗}N antenna units.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. An apparatus for weight assignment in beamforming BF, comprising M optical carrier modules, M electro-optic modulation modules, M optical time delay modules, a splitting wavelength division multiplexer WDM, N photoelectric conversion modules, and an antenna array having k^{∗}N antenna units, wherein k, M, and N are integers greater than or equal to 1, wherein
the optical carrier module is configured to generate an optical carrier having N different wavelengths;
the electro-optic modulation module is configured to modulate an electrical signal onto the optical carrier, to obtain a modulated optical signal, wherein the electrical signal is a baseband electrical signal, an intermediate frequency electrical signal, or a radio frequency electrical signal;
the optical time delay module is configured to perform time delay adjustment on the modulated optical signal;
the splitting WDM is configured to perform splitting based on a wavelength of the modulated optical signal that undergoes the time delay adjustment, to obtain N paths of optical sub-signals;
the photoelectric conversion module is configured to convert the N paths of optical sub-signals into N paths of electrical sub-signals, wherein the electrical sub-signals are baseband electrical signals, intermediate frequency electrical signals, or radio frequency electrical signals, wherein
when the N paths of electrical sub-signals are baseband electrical signals or intermediate frequency electrical signals, the N paths of electrical sub-signals are up-converted to obtain N paths of radio frequency electrical signals; and
the antenna array is configured to form a plurality of beams having adjustable directions based on amplitude and phase weightings of the N paths of radio frequency electrical signals.

2. The apparatus according to claim 1, wherein
the antenna array radiates the N paths of radio frequency electrical signals respectively by using the k^{∗}N antenna units based on the amplitude and phase weightings of the N paths of radio frequency electrical signals, to form the plurality of beams having the adjustable directions.

3. The apparatus according to claim 1, wherein the optical carrier module comprises a combining WDM and N tunable lasers, wherein preset wavelengths of the N tunable lasers are different from each other;
the tunable laser is configured to generate an optical wave; and
the combining WDM is configured to combine N optical waves having different wavelengths, to obtain the optical carrier.

4. The apparatus according to claim 1, wherein the optical carrier module comprises a tunable laser, an optical circulator, and an optical resonant microcavity, wherein
the tunable laser is configured to generate an optical wave of a preset single wavelength;
the optical circulator is configured to: transmit the optical wave to the optical resonant microcavity, and prevent the optical wave input to the optical resonant microcavity from being reflected back to the tunable laser; and
the optical resonant microcavity is configured to generate resonance for the input optical wave, to obtain the optical carrier having N different wavelengths that are at equal intervals.

5. The apparatus according to any one of claims 1 to 4, wherein when the N paths of electrical sub-signals are baseband electrical signals or intermediate frequency electrical signals, the apparatus further comprises a local oscillator LO and N mixers Mixers, wherein
the LO is configured to generate a local oscillator signal; and
the N mixers are configured to up-convert the N paths of baseband electrical signals or intermediate frequency electrical signals based on the local oscillator signal respectively, to obtain N paths of radio frequency signals.

6. The apparatus according to claim 5, wherein the apparatus further comprises N power amplifiers PAs; and
the N PAs are configured to perform power amplification on the N paths of radio frequency electrical signals respectively.

7. The apparatus according to claim 6, wherein the optical time delay module is an optical fiber true time delay unit based on an electric switch, an optical fiber true time delay unit based on an optical switch, a linearly chirped fiber grating time delay unit, or a true time delay unit based on spatial optical path switching.

8. The apparatus according to claim 7, wherein the electro-optic modulation module is a Mach-Zehnder electro-optic modulator MZM, and the optical time delay module is a linearly chirped fiber grating time delay unit.

9. The apparatus according to claim 7, wherein the electro-optic modulation module is a phase electro-optic modulator PM, the optical time delay module is a linearly chirped fiber grating time delay unit, and the photoelectric conversion module comprises a Mach-Zehnder interferometer MZI and a dual-balanced photodetector.

10. A method for weight assignment in beamforming BF, applied to an apparatus for weight assignment in BF, wherein the apparatus comprises M optical carrier modules, M electro-optic modulation modules, M optical time delay modules, a splitting wavelength division multiplexer WDM, N photoelectric conversion modules, and an antenna array having k^{∗}N antenna units, wherein k, M, and N are integers greater than or equal to 1; and the method comprises:
generating, by the optical carrier module, an optical carrier having N different wavelengths;
modulating, by the electro-optic modulation module, an electrical signal onto the optical carrier, to obtain a modulated optical signal, wherein the electrical signal is a baseband electrical signal, an intermediate frequency electrical signal, or a radio frequency electrical signal;
performing, by the optical time delay module, time delay adjustment on the modulated optical signal;
performing, by the splitting WDM, splitting based on a wavelength of the modulated optical signal that undergoes the time delay adjustment, to obtain N paths of optical sub-signals;
converting, by the photoelectric conversion module, the N paths of optical sub-signals into N paths of electrical sub-signals, wherein the electrical sub-signals are baseband electrical signals, intermediate frequency electrical signals, or radio frequency electrical signals, wherein
when the N paths of electrical sub-signals are baseband electrical signals or intermediate frequency electrical signals, the N paths of electrical sub-signals are up-converted to obtain N paths of radio frequency electrical signals; and
forming, by the antenna array, a plurality of beams having adjustable directions based on amplitude and phase weightings of the N paths of radio frequency electrical signals.

11. The method according to claim 10, wherein the forming, by the antenna array, a plurality of beams having adjustable directions based on amplitude and phase weightings of the N paths of radio frequency electrical signals comprises:
radiating, by the antenna array, the N paths of radio frequency electrical signals respectively by using the k^{∗}N antenna units based on the amplitude and phase weightings of the N paths of radio frequency electrical signals, to form the plurality of beams having the adjustable directions.

12. The method according to claim 11, wherein the optical carrier module comprises a combining WDM and N tunable lasers, wherein preset wavelengths of the N tunable lasers are different from each other; and
the generating, by the optical carrier module, an optical carrier having N different wavelengths comprises:
generating, by each of the N tunable lasers, an optical wave, to obtain N optical waves having different wavelengths; and
combining, by the combining WDM, the N optical waves having the different wavelengths, to obtain an optical carrier.

13. The method according to claim 11, wherein the optical carrier module comprises a tunable laser, an optical circulator, and an optical resonant microcavity; and
the generating, by the optical carrier module, an optical carrier having N different wavelengths comprises:
generating, by the tunable laser, an optical wave of a preset single wavelength;
transmitting, by the optical circulator, the optical wave to the optical resonant microcavity, and preventing the optical wave input to the optical resonant microcavity from being reflected back to the tunable laser; and
generating, by the optical resonant microcavity, resonance for the input optical wave, to obtain an optical carrier having N different wavelengths that are at equal intervals.

14. The method according to any one of claims 10 to 13, wherein when the N paths of electrical sub-signals are baseband electrical signals or intermediate frequency electrical signals, the apparatus further comprises a local oscillator LO and N mixers Mixers, wherein
that the N paths of electrical sub-signals are up-converted to obtain N paths of radio frequency electrical signals comprises:
generating, by the LO, a local oscillator signal; and
up-converting, by the N mixers, the N paths of baseband electrical signals or intermediate frequency electrical signals based on the local oscillator signal respectively, to obtain N paths of radio frequency electrical signals.

15. The method according to claim 14, wherein the apparatus further comprises N power amplifiers PAs; and
before the forming, by the antenna array, a plurality of beams having adjustable directions based on amplitude and phase weightings of the N paths of radio frequency electrical signals, the method further comprises:
performing, by the N PAs, power amplification on the N paths of radio frequency electrical signals respectively.
